**Europäisches Patentamt**

**European Patent Office**

**Office européen des brevets**

(11) Veröffentlichungsnummer: **0 568 826 B1**

(12) # EUROPÄISCHE PATENTSCHRIFT

(45) Veröffentlichungstag der Patentschrift: **25.10.95**

(51) Int. Cl.6: **B60H 1/00**

(21) Anmeldenummer: **93105730.1**

(22) Anmeldetag: **07.04.93**

(54) **Verfahren und Klimaanlage zur Regelung des Klimas in einem aus einem ersten und einem zweiten Halbraum bestehenden Innenraum eines Fahrzeuges.**

(30) Priorität: **02.05.92 DE 4214703**

(43) Veröffentlichungstag der Anmeldung:
**10.11.93 Patentblatt 93/45**

(45) Bekanntmachung des Hinweises auf die Patenterteilung:
**25.10.95 Patentblatt 95/43**

(84) Benannte Vertragsstaaten:
**DE ES FR GB IT PT**

(56) Entgegenhaltungen:
**DE-A- 3 820 412**
**US-A- 4 473 109**
**US-A- 4 763 564**

**PATENT ABSTRACTS OF JAPAN vol. 11, no. 131 (M-584)(2578) 24. April 1987 & JP-A-61 271 113 (NIPPON DENSO) 1. Dezember 1986**

**PATENT ABSTRACTS OF JAPAN vol. 11, no. 14 (M-553)(2461) 14. Januar 1987 & JP-A-61 188 213 (HITACHI) 21. August 1986**

(73) Patentinhaber: **Hella KG Hueck & Co.**
**Rixbecker Strasse 75**
**D-59552 Lippstadt (DE)**

(72) Erfinder: **Moersch, Volker**
**Curiestrasse 30**
**W-4780 Lippstadt (DE)**
Erfinder: **Decius, Andreas**
**Lippestrasse 65**
**W-4780 Lippstadt (DE)**

**Beschreibung**

Die Erfindung betrifft ein Verfahren und eine Klimaanlage zur Regelung des Klimas in einem aus einem ersten und einem zweiten Halbraum bestehenden Innenraum eines Fahrzeuges nach dem Oberbegriff der Patentansprüche 1 und 6.

Es sind Klimaanlagen für Fahrzeuge bekannt, bei denen der oder die Sollwerte für einzelne Bereiche des Fahrzeug-Innenraums getrennt vorgegeben werden. Eine derartige Klimaanlage ist beispielsweise in DE-A-34 09 321 beschrieben. Bei der bekannten Klimaanlage lassen sich die Innenraum-Sollwerttemperaturen, der Luftdurchsatz und die Luftverteilung für die Fahrer- und Beifahrerseite getrennt voneinander über Tasten vorgeben. Die Klimaanlage ist dabei mit einer einzigen Klimatisierungsvorrichtung versehen, die aus einer Kühl-/Heizvorrichtung zum Temperieren von über ein Gebläse zugeführter Luft und aus einer Luftverteilungsvorrichtung zum Verteilen der temperierten Luft auf unterschiedliche Ausströmöffnungen (Fußraum-, Mittel- oder Mannanström- und Defroster-Düsen) besteht. Zur Veränderung des Luftdurchsatzes, der Lufttemperatur und der Luftverteilung sind entsprechende Stellglieder vorgesehen. Zur Klimaregelung wird die an einer Stelle des Innenraums gemessene Innenraumtemperatur einer Regelvorrichtung zugeführt, die die Stellglieder der Klimatisierungsvorrichtung in Abhängigkeit von der gemessenen Innenraumtemperatur und einem oder mehreren Sollwerten sowie den für die Fahrer- und Beifahrerseite gegebenenfalls unterschiedlichen Vorgabewerten ansteuert.

Je nach der Größe und der Beschaffenheit eines Fahrzeug-Innenraums ist es erforderlich, mehrere der oben beschriebenen Klimatisierungsvorrichtungen vorzusehen. Dabei ist jede Klimatisierungsvorrichtung einem bestimmten Bereich des Fahrzeug-Innenraums zugeordnet. Mehrere Klimatisierungsvorrichtungen sind insbesondere dann erforderlich, wenn die zu regelnden Klimazonen nicht nebeneinander liegen, wie dies bei der aus DE-A-34 09 321 beschriebenen Klimaanlage der Fall ist, sondern - in Fahrtrichtung - hintereinander liegen, wie dies beispielsweise bei einem Transporter, Kleinbus o.dgl. eher der Fall ist. Das Problem der Klimaregelung bei einem Fahrzeug mit mehreren Klimazonen besteht darin, die Anzahl der Meßfühler zum Ermitteln der das Klima repräsentierenden Klimaparameter so gering wie möglich und diese Meßfühler an Stellen innerhalb des Fahrzeug-Innenraums anzuordnen, an denen sie sich für die Fahrgäste nicht störend auswirken, dennoch aber einen für das Klima repräsentativen Meßwert liefern.

Aus der US-A-4,473,109 ist ein Verfahren und eine Klimaanlage nach dem Oberbegriff der Patentansprüche 1 und 6 vorbekannt, bei dem dem ersten Halbraum zur Erzeugung eines Klimas, das durch mindestens einen ersten Klimaparameter, insbesondere die Innenraumtemperatur, spezifiziert ist, über eine erste Klimatisierungsvorrichtung Luft mit ersten Luftzuführparametern, wie z.B. Lufttemperatur, Luftdurchsatz und Luftverteilung, zugeführt wird und bei dem dem zweiten Halbraum zur Erzeugung eines Klimas, das durch mindestens einen zweiten Klimaparameter, insbesondere ebenfalls die Innenraumtemperatur, spezifiziert ist, über eine zweite Klimatisierungsvorrichtung Luft mit zweiten Luftzuführparametern (Lufttemperatur, Luftdurchsatz, Luftverteilung) zugeführt wird.

Bei diesem Verfahren wird der mindestens eine für das Klima innerhalb eines der beiden Halbräume repräsentative (erste oder zweite) Klimaparameter gemessen und zusammen mit einem für diesen Klimaparameter eingestellten Sollwert getrennt oder als Differenzsignal einer Regelung zugeführt. Durch diese Regelung wird der Klimaparameter, der meßtechnisch erfaßt wird, geregelt, indem die dem zugehörigen Halbraum zugeordnete Klimatisierungsvorrichtung entsprechend eingestellt wird. Für den zweiten Halbraum wird dasselbe Regelverfahren angewendet wie für den ersten Halbraum. Das heißt, der mindestens eine zweite Klimaparameter wird in Abhängigkeit von unter anderem der Abweichung des Meßwerts von einem vorgebbaren zweiten Sollwert für den mindestens einen zweiten Klimaparameter geregelt und die zweite Klimatisierungsvorrichtung entsprechend eingestellt.

Dies hat zur Folge, daß das vorbekannte Verfahren und die vorbekannte Klimaanlage fertigungs- und kostenaufwendig werden.

Der Erfindung liegt die Aufgabe zugrunde, ein Verfahren und eine Klimaanlage zur Regelung des Klimas in einem aus einem ersten und einem zweiten Halbraum bestehenden Innenraum eines Kraftfahrzeuges zu schaffen, bei denen das Klima in den beiden Halbräumen trotz Verwendung lediglich eines Meßfühlers für mindestens einen das Klima eines der beiden Halbräume repräsentierenden Klimaparameter dem eingestellten Vorgabewert entsprechend geregelt wird.

Zur Lösung dieser Aufgabe wird mit der Erfindung ein Verfahren vorgeschlagen, bei dem auf der Grundlage der Regelung des mindestens einen (ersten oder zweiten) Klimaparameters gleichzeitig auch die Klimatisierungsvorrichtung für den jeweils anderen Halbraum gesteuert wird. Das Ausgangssignal der Regelung für die eine Klimatisierungsvorrichtung wird dabei einer Steuerung für die andere Klimatisierungsvorrichtung zugeführt.

Die erfindungsgemäße Klimaanlage ist versehen mit einer mit der zweiten Klimatisierungsvorrichtung verbundenen Steuervorrichtung zur Steuerung der zweiten Klimatisierungsvorrichtung in Abhängigkeit von der Regelung des mindestens einen ersten Klimaparameters.

Nach der Erfindung wird das Klima in beiden Halbräumen des Fahrzeug-Innenraums anhand des Meßsignals für mindestens einen Klimaparameter lediglich eines der beiden Halbräume geregelt bzw. gesteuert. Bei diesem meßtechnisch erfaßten Klimaparameter handelt es sich im Regelfall um die Innenraumtemperatur. Es wäre aber auch denkbar, daß anstelle oder zusätzlich zu der Innenraumtemperatur auch die Feuchtigkeit der Luft im Fahrzeug-Innenraum meßtechnisch erfaßt und das Klima auch in Abhängigkeit von einer vorgegebenen Luftfeuchtigkeit geregelt wird. Bei der nachfolgenden Beschreibung der Erfindung wird aus Vereinfachungsgründen davon ausgegangen, daß das Klima lediglich anhand der vorgegebenen Innenraumtemperatur eingestellt wird.

Die Innenraumtemperatur für beide Halbräume wird geregelt bzw. gesteuert, ohne daß pro Halbraum ein entsprechender Meßfühler vorgesehen ist. Vielmehr ist nach der Erfindung vorgesehen, einen einzigen Meßfühler innerhalb eines der beiden Halbräume anzuordnen. Es hat sich herausgestellt, daß die Anordnung dieses Meßfühlers im Armaturenbrett (Schalttafel) des Fahrzeuges geeignet ist, um einen für den Fahrzeug-Innenraum repräsentativen Meßwert zu liefern. Diese Anordnung des Meßfühlers kann nach der Erfindung beibehalten bleiben, um bei Unterteilung des Fahrzeug-Innenraumes in zwei hintereinanderliegende Halbräume die Innenraumtemperatur für beide Halbräume zuverlässig zu regeln bzw. nachzuführen. Dabei handelt es sich bei der Innenraumtemperatur-Regelung für den hinteren Halbraum um sozusagen eine "intelligente" Steuerung, die in Abhängigkeit von der Innenraumtemperatur-Regelung für den vorderen Halbraum erfolgt, zu deren Zweck die Innenraumtemperatur mit dem Meßfühler gemessen wird. Das sich aus der Innenraumtemperatur-Regelung für den vorderen Halbraum ergebende Ansteuerungssignal für die Stellglieder der dem vorderen oder ersten Halbraum zugeordneten ersten Klimatisierungsvorrichtung wird einer Steuerung zugeführt, die ein Ausgangssignal zum Ansteuern der Stellglieder der dem hinteren oder zweiten Halbraum zugeordneten zweiten Klimatisierungsvorrichtung liefert. Die Umsetzung des Eingangssignals der Steuerung in das Ausgangssignal erfolgt dabei in Abhängigkeit von der Konfiguration des Fahrzeug-Innenraums. Über die allmähliche Vermischung der Luft beider Halbräume wird mit einem bestimmten Zeitverhalten auch die Innenraumtemperatur des hinteren Halbraums von dem im vorderen Halbraum angeordneten Meßfühler erfaßt. Insofern wird also auch die Temperatur des hinteren Halbraums geregelt, wobei die Regelstrecken zwischen den beiden Klimatisierungsvorrichtung und dem einen Meßfühler unterschiedlich sind. Die Unterschiede zwischen den Regelstrecken werden in der Steuerung für die Umsetzung des Ausgangssignals der Innenraumtemperatur-Regelung für den vorderen Halbraum in das Ansteuerungssignal für die Klimatisierungsvorrichtung des hinteren Halbraums berücksichtigt.

Mit der Erfindung werden ein Verfahren zur Klimaregelung bei Fahrzeugen und eine Klimaanlage für Fahrzeuge vorgeschlagen, bei denen der oder die das Klima des einen Halbraums bestimmenden Klimaparameter in Abhängigkeit von dem oder den das Klima des anderen Halbraums bestimmenden geregelten Klimaparametern gesteuert werden, um der Klimaregelung über die Klimaerfassung mit Hilfe des oder den lediglich in dem einen Halbraum untergebrachten Meßfühlern indirekt rückgeführt zu werden.

In vorteilhafter Weiterbildung der Erfindung ist vorgesehen, daß die Steuerung des mindestens einen zweiten Klimaparameters für das Klima des nicht mit dem Meßfühler versehenen zweiten Halbraums auch unter Berücksichtigung eines (für den zweiten Halbraum) separat vom ersten Sollwert vorgebbaren zweiten Sollwert für den mindestens einen zweiten Klimaparameter erfolgt. Bei dem mindestens einen zweiten Klimaparameter für den zweiten Halbraum handelt es sich ebenfalls vorteilhafterweise um die Innenraumtemperatur. Bei der hier beschriebenen Variante der Erfindung ist es also möglich, die Innenraumtemperatur für den zweiten Halbraum, der nicht mit einem Innenraumtemperatur-Meßfühler versehen ist, separat vom Innenraumtemperatur-Sollwert für den anderen Halbraum vorzugeben. Vorteilhafterweise läßt sich der Sollwert für den mindestens einen zweiten Klimaparameter lediglich in Abhängigkeit von der Größe des Sollwerts für den mindestens einen ersten Klimaparameter vorgeben, indem der zweite Sollwert lediglich um einen bestimmten prozentualen Betrag oder um einen konstanten Betrag von der Größe des ersten Sollwerts abweichend vorgegeben werden darf.

Vorzugsweise läßt sich jeweils mindestens einer der ersten bzw. zweiten Luftzuführparameter auch unter Berücksichtigung jeweils mindestens eines separat einstellbaren Vorgabewerts wählen. Hierbei ist beispielsweise daran gedacht, die Luftdurchsätze für die beiden Halbräume gegebenenfalls unterschiedlich vorzugeben.

Vorteilhafterweise wird der mindestens eine zweite Klimaparameter (Innenraumtemperatur für den hinteren Halbraum) auf der Grundlage einer Steuergröße vorgegeben, die den thermischen Energiebedarf für das durch den mindestens einen zweiten Klimaparameter spezifizierte Klima des hinteren Halbraums repräsentiert, wobei die zweite Klimatisierungsvorrichtung der Steuergröße entsprechend gesteuert wird. Die Steuergröße kann in Form einer Führungsmatrix dargestellt werden, deren Elemente die zweiten Luftzuführparameter repräsentieren. Insbesondere umfaßt die Führungsmatrix Angaben über die Temperatur und den Durchsatz der dem hinteren Halbraum zugeführten Luft. Bei Vorgabe eines vom ersten Sollwert für den vorderen Halbraum abweichenden zweiten Sollwert für den hinteren Halbraum wird die Führungsmatrix zeilen- bzw. spaltenweise mit den Sollwertunterschieden entsprechenden Offset-Werten beaufschlagt. Während sich ein Innenraumtemperatur-Sollwert auf eine Veränderung sowohl der Temperatur als auch des Durchsatzes der dem hinteren Halbraum zugeführten Luft auswirkt, wirkt sich die Vorgabe der Geschwindigkeit der dem hinteren Halbraum zugeführten Luft auf die den Luftdurchsatz für Warm- und den Luftdurchsatz für Kaltluft repräsentierenden Elemente der Führungsmatrix aus.

Nachfolgend wird anhand der Figuren ein Ausführungsbeispiel der Erfindung näher erläutert. Im einzelnen zeigen:

Fig. 1     schematisch einen Kleintransporter mit zwei Klimatisierungsvorrichtungen mit eingezeichneten Warmluft- und Kaltluftströmungen und Stellgliedern sowie Sensoren und

Fig. 2     ein Blockschaltbild der Regelung bzw. Steuerung der beiden Klimatisierungsvorrichtung zur Erzielung eines Klimas im Fahrzeug-Innenraum mit vorgebbarer Innenraumtemperatur.

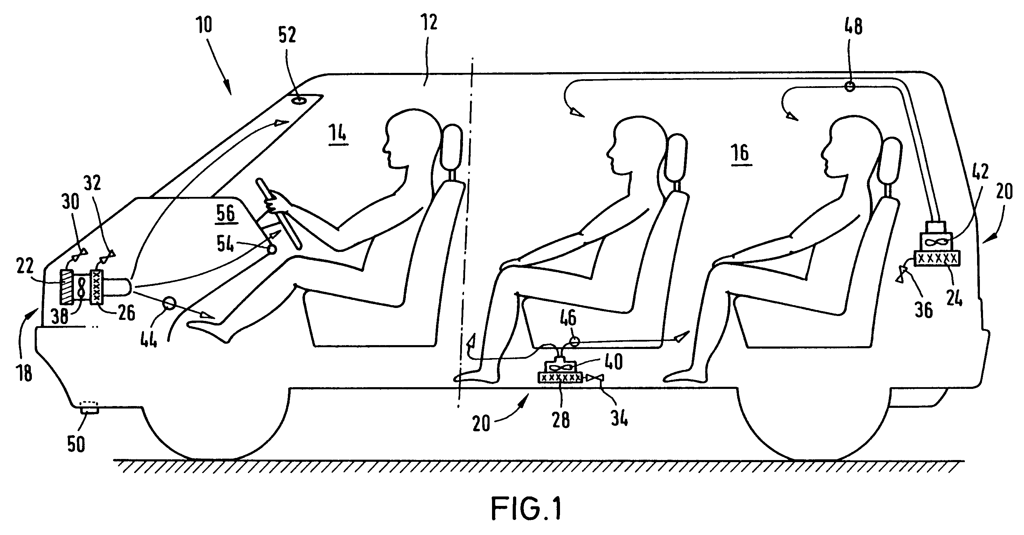

In Fig. 1 ist stark schematisiert und in Seitenansicht ein Kleinbus 10 dargestellt. Der Innenraum 12 des Fahrzeuges ist in einen ersten vorderen Halbraum 14 für den Fahrer und den Beifahrer und in einen zweiten hinteren Halbraum 16 für die übrigen Fahrgäste unterteilt. Die beiden Halbräume 14,16 sind nicht voneinander getrennt; die gestrichelte Linie in Fig. 1 soll lediglich die Grenzfläche zwischen den beiden Halbräumen 14,16 andeuten. Pro Halbraum ist eine Klimatisierungsvorrichtung vorgesehen, wobei die erste Klimatisierungsvorrichtung 18 zur Erzeugung von temperierter Luft für den vorderen Halbraum 14 und die zweite Klimatisierungsvorrichtung 20 zur Erzeugung von temperierter Luft für den hinteren Halbraum 16 vorgesehen ist. Beide Klimatisierungsvorrichtungen 18,20 weisen jeweils ein Kühlaggregat 22,24 und ein Heizaggregat 26,28 auf. Während das Kühlaggregat 22 und das Heizaggregat 26 der ersten Klimatisierungsvorrichtung 18 direkt hintereinander angeordnet sind (Reheat-Verfahren) sind die beiden Aggregate 24,28 der zweiten Klimatisierungsvorrichtung 20 räumlich voneinander getrennt angeordnet. Die Kühlmittel- bzw. Wärmemittelkreisläufe sämtlicher Aggregate werden über Stellglieder 30,32,34,36 in Form von Ventilen gesteuert. Während die erste Klimatisierungsvorrichtung 18 ein zwischen ihrem Kühl- und ihrem Heizaggregat 22,26 angeordnetes Gebläse 38 aufweist, ist den beiden Aggregaten 24,28 der zweiten Klimatisierungsvorrichtung 18 jeweils ein separates Gebläse 40,42 zugeordnet. Die von dem Gebläse 38 erzeugte und durch die Kühl- und Heizaggregate 22,26 der ersten Klimatisierungsvorrichtung 18 erwärmte Luft wird dem vorderen Halbraum 14 über die Fußraumdüsen, die Mannanströmdüsen und die Defroster-Düsen zugeführt. Die Luftverteilung auf diese Düsen erfolgt durch (in Fig. 1 nicht eingezeichnete) Stellklappen. Warmluft wird dem vorderen Halbraum 14 vornehmlich über die Fußraumdüsen zugeführt, während Kaltluft über die Defroster-Düsen in den vorderen Halbraum 14 gelangt, es sei denn, daß die erste Klimatisierungsvorrichtung 18 im Defroster-Betrieb arbeitet. Das Heizaggregat 28 der zweiten Klimatisierungsvorrichtung 20 ist im Bodenbereich des Kleinbusses 10 angeordnet, so daß die über Fußraumöffnungen ausströmende Warmluft innerhalb des zweiten Halbraumes 16 aufsteigen kann, was durch entsprechende Strömungspfeile in Fig. 1 angedeutet ist. Das Kühlaggregat 24 der zweiten Klimatisierungsvorrichtung 20 ist im Heckbereich angeordnet; die Kühlluft gelangt über Dach-Ausströmer von oben in den zweiten Halbraum 16, was durch entsprechende Strömungspfeile in Fig. 1 angedeutet ist. Die Verteilung der dem hinteren Halbraum 16 zugeführten temperierten Luft über die Fußraumöffnungen und die Dachausströmer erfolgt durch entsprechende Stellung von Steuerklappen.

Zur Ermittlung der Ausblastemperaturen sind Temperatursensoren 44,46 und 48 vorgesehen. Die Außentemperatur wird durch einen Außentemperaturfühler 50 ermittelt. Die Sonnenstrahlung, der der Kleinbus 10 ausgesetzt ist, wird über einen Sonnenstrahlungssensor 52 erfaßt. Die Innenraumtemperatur für beide Halbräume 14,16 wird durch einen Innenraumtemperatursensor 54 meßtechnisch erfaßt, der im bzw. am Armaturenbrett 56, also innerhalb des vorderen Halbraumes 14 angeordnet ist.

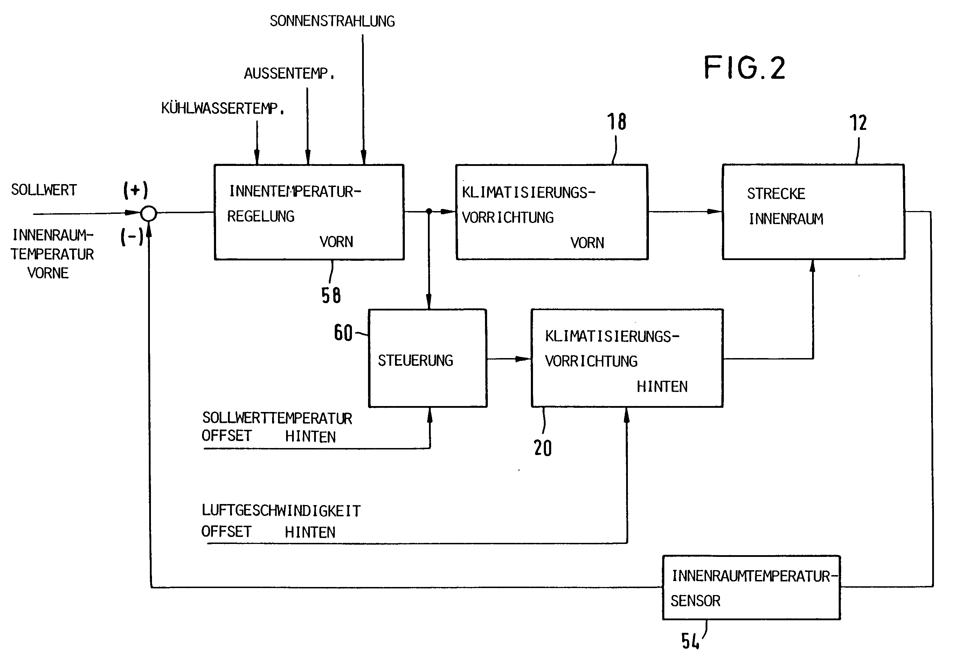

Anhand des Blockschaltbildes nach Fig. 2 soll nachfolgend die Temperaturregelung für den Innenraum 12 des Kleinbusses 10 gemäß Fig. 1 erläutert werden. Über ein Bedien-Tastenfeld der Klimaanlage wird ein Sollwert für die Innenraumtemperatur des vorderen Halbraums 14 vorgegeben. Das Differenzsignal aus dem Meßsignal des Innenraumtemperatursensors 54 und dem Sollwert wird einer Innenraumtemperatur-Regeleinrichtung 58 zur Regelung der Innenraum des vorderen Halbraums 14 zugeführt. Die Regeleinrichtung 58 empfängt überdies Signale von dem Sonnenstrahlungssensor 52, dem Außentemperaturfühler 50 und einem die Kühlwassertemperatur erfassenden (in Fig. 1 nicht eingezeichneten) Sensors.

Auf der Grundlage des Ausgangssignal der Innenraumtemperatur-Regeleinrichtung 58 wird die erste Klimatisierungsvorrichtung 18 für den vorderen Halbraum 14 gesteuert. Ferner wird das Ausgangssignal der Innenraumtemperatur-Regeleinrichtung 58 auch einer Steuerschaltung 60 zugeführt, die das empfangene Signal in Ansteuerungssignale für die Stellglieder der zweiten Klimatisierungsvorrichtung 20 für den hinteren Halbraum 16 umsetzt. Die von den beiden Klimatisierungsvorrichtungen 18,20 temperierte Luft wird den beiden Halbräumen 14,16, also dem Innenraum 12 des Kleinbusses 10 zugeführt. Über den Innenraumtemperatursensor 54 wird die Temperatur des Innenraums 12 erfaßt.

Der Hauptaspekt der Klimaanlage für den Kleinbus 10 ist darin zu sehen, daß die zweite Klimatisierungsvorrichtung 20 für den hinteren Halbraum 16 in Abhängigkeit von dem von der Innenraumtemperatur-Regeleinrichtung 58 gelieferten Ausgangssignal zur Ansteuerung der ersten Klimatisierungsvorrichtung 18 für den vorderen Halbraum 14 gesteuert wird. Dabei wird das Ausgangssignal der Innenraumtemperatur-Regeleinrichtung 58 in der Steuerschaltung 60 umgesetzt, und zwar derart, daß die von der zweiten Klimatisierungsvorrichtung 20 gelieferte thermische Energie dem Energiebedarf des hinteren Halbraums 16 unter Berücksichtigung der Innenraumtemperatur-Vorgabe, der gemessenen Innenraumtemperatur, der Fahrzeugumfeldbedingungen und der von der ersten Klimatisierungsvorrichtung 18 dem vorderen Halbraum 14 zugeführten thermischen Energie entspricht.

Über das Bedien-Tastenfeld der Klimaanlage kann der Steuerschaltung 60 ein Sollwert-Innenraumtemperatur-Offset für den hinteren Halbraum 16 zugeführt werden. Ebenso ist es möglich, die Luftgeschwindigkeit für die ausströmende Luft des hinteren Halbraums 16 separat einzustellen (Luftgeschwindigkeit-Offset). Über eine weitere Taste kann auch die Luftgeschwindigkeit der dem vorderen Halbraum 14 zugeführten Luft manuell eingestellt werden, was in Fig. 2 aus Gründen der besseren Übersichtlichkeit nicht eingezeichnet ist. Eine Abweichung des Sollwertes für die Innenraumtemperatur im hinteren Halbraum 16 gegenüber dem Sollwert für die Innenraumtemperatur des vorderen Halbraums 14 ist lediglich in einem bestimmten Maße möglich, da ansonsten die von dem Innenraumtemperatursensor 54 gemessene Temperatur nicht mehr für den vorderen Halbraum 14 repräsentativ ist. Die Offset-Vorgabe für die Sollwert-Temperatur des hinteren Halbraums 16 sollte nicht mehr als wenige °C von dem Sollwert für die Innenraumtemperatur des vorderen Halbraums 14 abweichen. Die in der Steuerschaltung 60 aus dem Ausgangssignal der Innenraumtemperatur-Regeleinrichtung 58 etablierte Steuergröße kann als Steuermatrix für die zweite Klimatisierungsvorrichtung 20 des hinteren Halbraums 16 aufgefaßt werden. Diese 2x2 Matrix stellt sich wie folgt dar:

$$M = \begin{bmatrix} \phi_{HEIZ} & T_{HEIZ} \\ \phi_{K\ddot{U}HL} & T_{K\ddot{U}HL} \end{bmatrix}$$

wobei $\phi_{HEIZ}$ den Luftdurchsatz für die Warmluft, $\phi_{K\ddot{U}HL}$ die den Luftdurchsatz für die Kaltluft, $T_{HEIZ}$ die Warmlufttemperatur und $T_{K\ddot{U}HL}$ die Kaltlufttemperatur der dem hinteren Halbraum 16 zugeführten Luft repräsentiert. Bei vom Automatikbetrieb abweichenden manuellen Vorgaben für die Innenraumtemperatur des hinteren Halbraums 16 wird die gesamte Matrix M zeilen- bzw. spaltenweise mit Offset-Werten beaufschlagt. Bei einer Variation der Geschwindigkeit der dem hinteren Halbraum zugeführten Luft ändern sich lediglich die Parameter $\phi_{HEIZ}$ und $\phi_{K\ddot{U}HL}$ der obigen Matrix M.

**Patentansprüche**

1. Verfahren zur Regelung des Klimas in einem aus einem ersten und einem zweiten Halbraum bestehenden Innenraum eines Fahrzeuges, bei dem

   - dem ersten Halbraum (14) zur Erzeugung eines Klimas, das durch mindestens einen ersten Klimaparameter, insbesondere die Innenraumtemperatur, spezifiziert ist, über eine erste Klimatisierungsvorrichtung (18) Luft mit ersten Luftzuführparametern zugeführt wird,
   - dem zweiten Halbraum (16) zur Erzeugung eines Klimas, das durch mindestens einen zweiten Klimaparameter, insbesondere ebenfalls die Innenraumtemperatur, spezifiziert ist, über eine zweite Klimatisierungsvorrichtung (20) Luft mit zweiten Luftzuführparametern zugeführt wird,
   - der mindestens eine erste Klimaparameter gemessen wird, und
   - der mindestens eine erste Klimaparameter in Abhängigkeit von unter anderem der Abweichung des Meßwerts von einem vorgebbaren ersten Sollwert für den mindestens einen ersten Klimaparameter geregelt und die erste Klimatisierungsvorrichtung (18) entsprechend eingestellt wird,

dadurch gekennzeichnet, daß der mindestens eine zweite Klimaparameter auf der Grundlage der Regelung des mindestens einen ersten Klimaparameters vorgegeben und die zweite Klimatisierungsvorrichtung (20) dem derart vorgegebenen mindestens einen zweiten Klimaparameter entsprechend gesteuert wird.

2. Verfahren nach Anspruch 1, dadurch gekennzeichnet, daß der mindestens eine zweite Klimaparameter auf der Grundlage einer Steuergröße (M) vorgegeben wird, die den thermischen Energiebedarf für das durch den mindestens einen zweiten Klimaparameter spezifizierte Klima des zweiten Halbraums (16) repräsentiert, und daß die zweite Klimatisierungsvorrichtung (20) der Steuergröße (M) entsprechend gesteuert wird.

3. Verfahren nach Anspruch 1 oder 2, dadurch gekennzeichnet, daß der mindestens eine zweite Klimaparameter auch unter Berücksichtigung eines separat vom ersten Sollwert vorgebbaren zweiten Sollwert für den mindestens einen zweiten Klimaparameter gesteuert wird.

4. Verfahren nach Anspruch 3, dadurch gekennzeichnet, daß die Größe des zweiten Sollwerts von der Größe des ersten Sollwerts abhängig gewählt wird.

5. Verfahren nach einem der Ansprüche 1 bis 4, dadurch gekennzeichnet, daß mindestens einer der ersten und/oder mindestens einer der zweiten Luftzuführparameter auch unter Berücksichtigung jeweils mindestens eines separat einstellbaren Vorgabewerts gewählt wird.

6. Klimaanlage für einen aus einem ersten und einem zweiten Halbraum bestehenden Innenraum eines Fahrzeuges, insbesondere zur Durchführung des Verfahrens nach Anspruch 1, mit
   - einer ersten Klimatisierungsvorrichtung (18) zum Erzeugen von dem ersten Halbraum (14) zuzuführender Luft mit ersten Luftzuführparametern für ein durch mindestens einen ersten Klimaparameter spezifizierbares Klima innerhalb des ersten Halbraums (14),
   - einer zweiten Klimatisierungsvorrichtung (20) zum Erzeugen von dem zweiten Halbraum (16) zuzuführender Luft mit zweiten Luftzuführparametern für ein durch mindestens einen zweiten Klimaparameter spezifizierbares Klima innerhalb des zweiten Halbraums (16),
   - einer Meßvorrichtung (54) zum Erfassen des mindestens einen ersten Klimaparameters,
   - einer Einstellvorrichtung zum Vorgeben eines Sollwerts für den mindestens einen ersten Klimaparameter und
   - einer mit der ersten Klimatisierungsvorrichtung (18) verbundenen Regeleinrichtung (58) zur Regelung des mindestens einen ersten Klimaparameters in Abhängigkeit von dem Meßwert und dem Sollwert für den mindestens einen ersten Klimaparameter

dadurch gekennzeichnet, daß eine mit der zweiten Klimatisierungsvorrichtung (20) verbundene Steuervorrichtung (60) zur Steuerung der zweiten Klimatisierungsvorrichtung (20) in Abhängigkeit von der Regelung des mindestens einen ersten Klimaparameters vorgesehen ist.

7. Klimaanlage nach Anspruch 6, dadurch gekennzeichnet, daß die Steuervorrichtung (60) die zweite Klimatisierungsvorrichtung (20) zusätzlich unter Berücksichtigung eines vorgebbaren zweiten Sollwerts für den mindestens einen zu steuernden zweiten Klimaparameter steuert.

8. Klimaanlage nach Anspruch 6, dadurch gekennzeichnet, daß die Größe des zweiten Sollwerts von der Größe des ersten Sollwerts abhängig vorgebbar ist.

9. Klimaanlage nach einem der Ansprüche 6 bis 8, dadurch gekennzeichnet, daß mindestens einer der ersten und/oder mindestens einer der zweiten Luftzuführparameter auch unter Berücksichtigung mindestens eines separat einstellbaren Vorgabewerts gewählt ist.

**Claims**

1. A process for regulating the climate in an interior space of a vehicle consisting of a first and a second half-space, in which
   - air is supplied, with first air supply parameters, via a first air-conditioning unit (18) to the first half-space (14) for the production of a climate which is specified by at least one first climatic parameter, particularly the interior space temperature,
   - air is supplied, with second air supply parameters, via a second air-conditioning unit (20) to the second half-space (16) for the production of a climate which is specified by at least one second climatic parameter, likewise particularly the interior space temperature,
- the at least one first climatic parameter is measured, and
- the at least one first climatic parameter is regulated depending, amongst other factors, on the deviation of the measured value from a predeterminable first set value for the at least one first climatic parameter, and the first air-conditioning unit (18) is adjusted correspondingly,

characterised in that the at least one second climatic parameter is predetermined based on the regulation of the at least one first climatic parameter and the second air-conditioning unit (20) is controlled corresponding to the at least one second climatic parameter predetermined in this manner.

2. A process according to claim 1, characterised in that the at least one second climatic parameter is predetermined based on an actuating variable (M) which represents the thermal energy requirement for the climate of the second half-space (16) specified by the at least one second climatic parameter, and that the second air-conditioning unit (20) is controlled corresponding to the actuating variable (M).

3. A process according to claim 1 or 2, characterised in that the at least one second climatic parameter is also controlled taking into account a second set value, which is predeterminable separately from the first set value, for the at least one second climatic parameter.

4. A process according to claim 3, characterised in that the magnitude of the second set value is selected depending on the magnitude of the first set value.

5. A process according to any one of claims 1 to 4, characterised in that at least one of the first and/or at least one of the second air supply parameters is also selected taking into account at least one separately adjustable specified value in each case.

6. An air-conditioning unit for an interior space of a vehicle consisting of a first and second half-space, particularly for carrying out the process according to claim 1, having
- a first air-conditioning unit (18) for the production of air to be supplied with first air supply parameters to the first half-space (14), for a climate inside the first half-space (14) which can be specified by at least one first climatic parameter,
- a second air-conditioning unit (20) for the production of air to be supplied with second air supply parameters to the second half-space (16), for a climate inside the second half-space (16) which can be specified by at least one second climatic parameter,
- a measuring device (54) for determining the at least one first climatic parameter,
- an adjusting device for predetermining a set value for the at least one first climatic parameter, and
- a regulating device (58) connected to the first air-conditioning unit (18) for regulating the at least one first climatic parameter depending on the measured value and on the set value for the at least one first climatic parameter,

characterised in that a controller (60) connected to the second air-conditioning unit (20) is provided for controlling the second air-conditioning unit (20) depending on the regulation of the at least one first climatic parameter.

7. An air-conditioning unit according to claim 6, characterised in that the controller (60) additionally controls the second air-conditioning unit (20) taking into account a predeterminable second set value for the at least one second climatic parameter to be controlled.

8. An air-conditioning unit according to claim 6, characterised in that the magnitude of the second set value is predeterminable depending on the magnitude of the first set value.

9. An air-conditioning unit according to any one of claims 6 to 8, characterised in that at least one of the first and/or at least one of the second air supply parameters is also selected taking into account at least one separately adjustable specified value.

**Revendications**

1. Procédé pour la régulation du climat dans un espace intérieur d'un véhicule, consistant en un premier demi-espace et un deuxième demi-espace, lors duquel
- au premier demi-espace (14), pour l'engendrement d'un climat, qui est spécifié par au moins un premier paramètre de climat, en particulier la température d'espace intérieur, par l'intermédiaire d'un premier dispositif de climatisation (18), de l'air avec de premiers paramètres d'amenée d'air est amené,

- au deuxième demi-espace (16), pour l'engendrement d'un climat, qui est spécifié par au moins un deuxième paramètre de climat, en particulier également la température d'espace intérieur, par l'intermédiaire d'un deuxième dispositif de climatisation (20), de l'air avec de deuxièmes paramètres d'amenée d'air est amené,
- au moins un premier paramètre de climat est mesuré, et
- au moins le premier paramètre de climat est régulé en dépendance, entre autres, de la déviation de la valeur de mesure d'une première valeur à atteindre, susceptible d'être préalloulée pour au moins le premier paramètre de climat, et le premier dispositif de climatisation (18) est ajusté de façon correspondante,

caractérisé en ce qu'au moins le deuxième paramètre de climat, sur la base de la régulation d'au moins le premier paramètre de climat, est préalloué, et en ce que le deuxième dispositif de climatisation (20) est commandé de façon correspondant à au moins le deuxième paramètre de climat préalloué de ce type.

2. Procédé selon la revendication 1, caractérisé en ce qu'au moins le deuxième paramètre de climat est préalloué sur la base d'une grandeur de commande (M), qui représente le besoin d'énergie thermique pour le climat du deuxième demi-espace (16) spécifié par au moins le deuxième paramètre de climat, et en ce que le deuxième dispositif de climatisation (20) est commandé de façon correspondant à la grandeur de commande (M).

3. Procédé selon la revendication 1 ou la revendication 2, caractérisé en ce qu'au moins le deuxième paramètre de climat est commandé en prenant en considération aussi une deuxième valeur à atteindre, susceptible d'être préallouée séparément de la première valeur à atteindre, pour au moins le deuxième paramètre de climat.

4. Procédé selon la revendication 3, caractérisé en ce que la grandeur de la deuxième valeur à atteindre est choisie dépendante de la grandeur de la première valeur à atteindre.

5. Procédé selon une des revendications 1 à 4, caractérisé en ce qu'au moins un des premiers paramètres d'amenée d'air et/ou au moins un des deuxièmes paramètres d'amenée d'air sont choisis en prenant aussi en considération, chaque fois, au moins une valeur de préallocation susceptible d'être ajustée séparément.

6. Installation de climatisation pour un espace intérieur d'un véhicule, consistant en un premier demi-espace et un deuxième demi-espace, en particulier pour la mise en oeuvre du procédé selon la revendication 1, comprenant
   - un premier dispositif de climatisation (18), pour l'engendrement d'air avec de premiers paramètres d'amenée d'air, à amener au premier demi-espace (14), pour un climat à l'intérieur du premier demi-espace (14) susceptible d'être spécifié par au moins un premier paramètre de climat,
   - un deuxième dispositif de climatisation (20), pour l'engendrement d'air avec de deuxièmes paramètres d'amenée d'air, à amener au deuxième demi-espace (16), pour un climat à l'intérieur du deuxième demi-espace (16) susceptible d'être spécifié par au moins un deuxième paramètre de climat,
   - un dispositif de mesure (54), pour la détection d'au moins le premier paramètre de climat,
   - un dispositif d'ajustement pour la préallocation d'une valeur à atteindre pour au moins le premier paramètre de climat, et
   - un agencement de régulation (58) relié avec le premier dispositif de climatisation (18), pour la régulation d'au moins le premier paramètre de climat, en dépendance de la valeur de mesure et de la valeur à atteindre pour au moins le premier paramètre de climat,

   caractérisé en ce qu'un dispositif de commande (60), relié avec le deuxième dispositif de climatisation (20), est prévu pour la commande du deuxième dispositif de climatisation (20), en dépendance de la régulation d'au moins le premier paramètre de climat.

7. Installation de climatisation selon la revendication 6, caractérisé en ce que le dispositif de commande (60) commande de façon supplémentaire le deuxième dispositif de climatisation (20), en prenant en considération une deuxième valeur à atteindre, susceptible d'être préallouée, pour au moins le deuxième paramètre de climat à commander.

8. Installation de climatisation selon la revendication 6, caractérisé en ce que la grandeur de la deuxième valeur à atteindre est susceptible d'être préallouée en dépendance de la grandeur de la première valeur à atteindre.

9. Installation de climatisation selon une des revendications 6 à 8, caractérisé en ce qu'au moins un des premiers paramètres d'amenée d'air et/ou au moins un des deuxièmes paramètres d'amenée d'air sont choisis en prenant considération, aussi, au moins une valeur de préallocation susceptible d'être ajustée séparément.

FIG.1

EP 0 568 826 B1

FIG.2

SONNENSTRAHLUNG

AUSSENTEMP.

KÜHLWASSERTEMP.

SOLLWERT

INNENRAUM-
TEMPERATUR
VORNE

(+)

(-)

INNENTEMPERATUR-
REGELUNG

VORN

58

KLIMATISIERUNGS-
VORRICHTUNG

VORN

18

STRECKE

INNENRAUM

12

60

STEUERUNG

KLIMATISIERUNGS-
VORRICHTUNG

HINTEN

20

SOLLWERTTEMPERATUR
OFFSET    HINTEN

LUFTGESCHWINDIGKEIT
OFFSET    HINTEN

INNENRAUMTEMPERATUR-
SENSOR

54

EP 0 568 826 B1